# EUROPEAN PATENT APPLICATION

(11) **EP 2 463 569 A1**
(43) Date of publication of application: **13.06.2012**
(21) Application number: 11193331.3
(22) Date of filing: 13.12.2011
(51) Int. Cl.: F16L 37/084, F16L 37/252

(54) **Duct connector**

(30) Priority: 13.12.2010 AU 2010905462
(71) Applicant: Denso Automotive Systems Australia PTY Ltd, Croydon, Victoria 3136 (AU)
(72) Inventor: Williams, Neil, Croydon, Victoria 3136 (AU); Lofhelm, Stefan, Croydon, Victoria 3136 (AU)
(74) Representative: Texier, Christian

(57) **Abstract**

A quick-connect connector (10) for connecting ends of first and second ducts (12,14), the connector including a sleeve (16) having opposite ends to be received over the ducts, wherein the sleeve has quick-connect couplings (18,36) disposed at each end to engage corresponding couplings on the duct ends. One of the quick-connect couplings has a resilient clip (18) configured to engage corresponding lugs on the first duct (14) end, wherein the resilient clip (18) has a plurality of engaging portions configured to engage the lugs and the sleeve (16) is configured to maintain alignment of the engaging portions as the connector is being received over an end of the duct and configured to allow at least one of the engaging portions to be further advanced along the sleeve after the connector has been received to engage a respective corresponding lug which has been axially offset along the duct.

## Description

### FIELD OF THE INVENTION

The present invention relates to a quick-connect connector for ducts. For example, the present invention relates to a connector for connecting ducts such as blow moulded or injection moulded ducts for use in automobile air intake systems.

### BACKGROUND OF THE INVENTION

Duct systems are commonly assembled on assembly lines, making it desirable for connectors to provide positive engagement quickly and easily. Hose clamps have been previously proposed though can be difficult and time consuming to install and their use requires a rigid duct end for clamping to and a smooth surface for sealing. Ducts are commonly blow moulded and due to the relatively soft material used can require a rigid ring to be located in the end of the duct to support the clamping force. Such ducts may also require internal machining to provide a surface suitable to match the rigid ring.

Previously proposed quick-fit duct connectors can be expensive to manufacture and may not consistently provide positive engagement with ducts, in particular blow moulded ducts which can be dimensionally unstable. Some previously proposed duct connectors also require a permanent connection to be formed with a duct before they can assembled into a duct system, the permanent connection being complicated and requiring the use of special tooling.

What is needed is a duct connector which addresses the above difficulties.

### SUMMARY OF THE INVENTION

According to the present invention, there is provided a quick-connect connector for connecting ends of first and second ducts, the connector including a sleeve having opposite ends to be received over the ducts, wherein the sleeve has quick-connect couplings disposed at each end to engage corresponding couplings on the duct ends

At least one of the quick-connect couplings can have a resilient clip configured to engage corresponding lugs on the first duct end. Both of the quick-connect couplings can have resilient clips configured to engage corresponding lugs on the duct ends.

A second quick-connect coupling can form part of a twist-lock bayonet coupling. The second quick-connect coupling can form a socket part of the twist-lock bayonet coupling.

The at least one resilient clip can have a plurality of engaging portions configured to engage the lugs.

The sleeve can be configured to maintain alignment of the engaging portions as the connector is being received over an end of the duct and configured to allow at least one of the engaging portions to be further advanced along the sleeve after the connector has been received to engage a respective corresponding lug which have been axially offset along the duct.

The connector can be configured so that retraction of the connector causes any of the engaging portions which have not engaged corresponding lugs when the connector has been received to become engaged with those lugs.

The engaging portions can be axially aligned around the connector as it is received by the duct. The at least one resilient clip can be generally semi-circular and have two lateral duct engaging portions, each being disposed near an end of the clip. The clip can further include a central duct engaging portion disposed between the lateral duct engaging portions.

The lateral engaging members can be biased radially inward and configured so as to be disengaged from their corresponding lugs when the central engaging portion is disengaged from its corresponding lug.

The at least one resilient clip can extend around an external surface of the connector.

The duct connector can further include a seal disposed within the tubular body to engage an outer surface of each duct end to fluidly seal the connection.

The seal can have a pair of lips in the form of inwardly turned flanges, each lip configured to engage an end of the duct so that pressure of a fluid flowing in the duct urges the lip against the duct. The seal can have a pair of inwardly projecting ribs adjacent each end of the connector.

The connector can, adjacent the bayonet coupling, further include a resilient locking tab configured to engage a corresponding lug configured to engage a corresponding lug on the second duct when locked to prevent rotation of the connector relative to the second duct.

The bayonet coupling can include three slots, one of which is offset around the circumference of the connector so that the connector can only be connected to the first duct in a single orientation.

According to the present invention, there is also provided a duct system, including a connector of the above described type and first and second ducts fixed thereto.

Lugs can be formed on the first duct to engage the first quick-connect coupling, the lugs being in the form of ramps extending radially outward, at least one of which is axially offset along the duct.

### BRIEF DESCRIPTION OF THE DRAWINGS

The invention will be further described by way of example only with reference to the accompanying drawings, in which:
Figure 1 is a perspective view of a duct connector of one embodiment of the invention, the duct connector connecting two ducts; and
Figure 2 is a partial sectioned view of the assembly of Figure 1;
Figure 3 is a plan view of a body of the connector;
Figure 4 is a sectioned view of the connector;
Figure 5 is perspective view of the assembly of Figure 1 in a partially disassembled condition of use;
Figure 6 is perspective view of the assembly of Figure 1 in another partially disassembled condition of use;
Figure 7 is a perspective end view of one of the ducts of the assembly of Figure 1;
Figure 8 is an end view of the duct of Figure 7;
Figure 9 is a perspective end view of another duct of the assembly of Figure 1;
Figure 10 is a plan view of the duct of Figure 9;
Figure 11 is an end view of the duct of Figure 9;
Figure 12 is a cutaway view of a seal for use with the connector; and
Figure 13 is a perspective view of the duct connector connecting two ducts, the duct connector having a differently configured seal.

### DETAILED DESCRIPTION

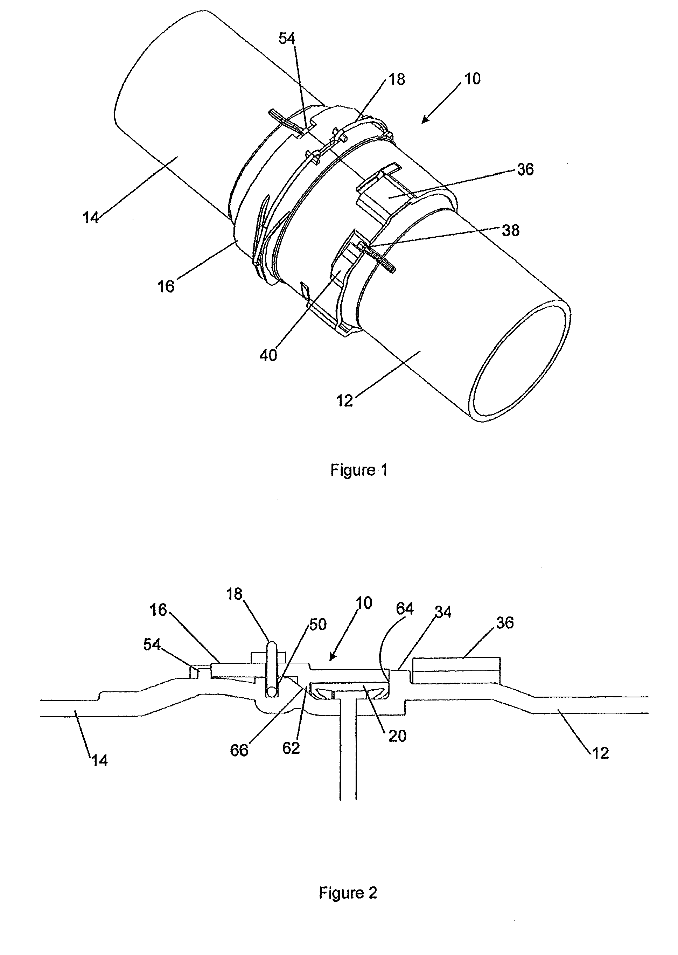

Figure 1 illustrates a duct connector 10 connecting first and second ducts 12 and 14 respectively. The connector 10 includes a body 16 and a resilient clip 18 which extends around an end of the connector 10. The ducts shown are formed from a suitable process, such as blow moulded from a plastic parison or injection moulding, and are configured for use in an air intake system of an automobile.

Referring to Figure 2, a partial sectioned view of the connection can be seen. The connector 10 is received over ends of the first and second ducts 12, 14 and provides snap-fitting engagement with the duct ends. In the example shown, the connector 10 is fixed to first duct 12. Resilient clip 18 extends around the body 16 of the connector 10 and is configured to engage lugs 50 formed on the second duct 14 to releasably fix the connector thereto. Connector 10 includes an annular seal 20 to fluidly seal the connection between the ducts 12, 14.

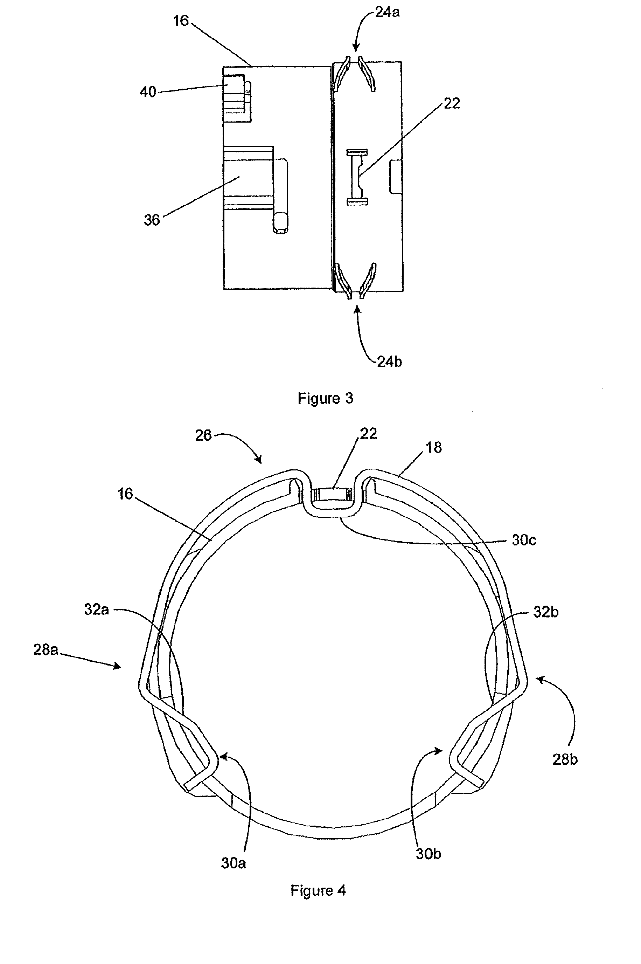

Figure 3 illustrates the body 16 of the connector 10. The clip 18 (not shown) is received in grooves 24a and 24b and slot 22. The shape of slot 22 allows the clip to be maintained in axial alignment as the connector 10 is being received by the duct though allows a part of the clip which is received in the slot 22 to be advanced along the connector once received.

As can be seen in Figure 4, the clip 18 is generally semi-circular in shape, though it may be shaped alternatively, and has a central section 26 disposed between lateral sections 28a, 28b. An engaging member 30 is disposed within each of the central (30c) and lateral sections (30a, 30b) for engaging corresponding lugs on the second duct 14. Although not depicted, in some embodiments the clip 18 may only include two lateral engaging members 30a, 30b without a central engaging member 30c. The clip 18 is configured so that the engaging members 30a, 30b in the lateral sections 28a, 28b are biased radially inwards

The clip 18 is also configured so that the engaging members in the lateral sections 28a, 28b are disengaged from their corresponding lugs on the second duct 14 when the central engaging member 30c is disengaged. When the central engaging member 30c is moved radially outwards to a disengaged position, sloping portions 32a, 32b of clip 18 contact body 16 and are urged radially outwards away from their corresponding lugs, thereby moving them also to a disengaged position so that the connector 10 cannot be fixed to the second duct 14 unless the central engaging member 30c has engaged its corresponding lug 50.

The central engaging member is shown in a central position of the clip 18, though it will be appreciated that it may be offset to either side of the centre of the clip 18.

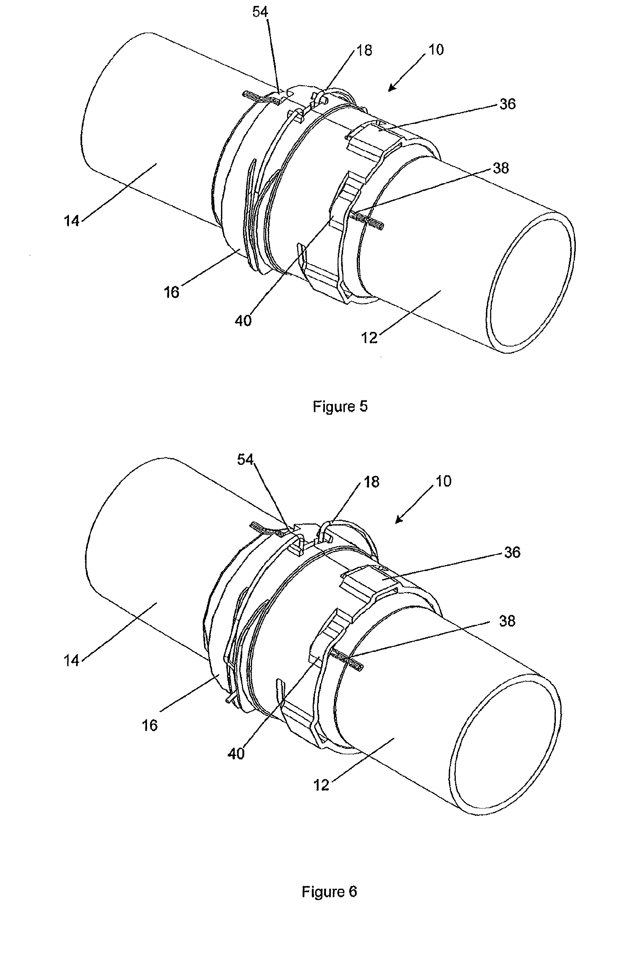

Figures 5 and 6 illustrate the connector 10 in partially assembled conditions of use. In Figure 5 it can be seen that the connector 10 is not locked to the first duct 12. In Figure 6, it can be seen that the central engaging member 30c of the clip 18 is in a disengaged position so that the connector 10 is not fixed to the second duct 14.

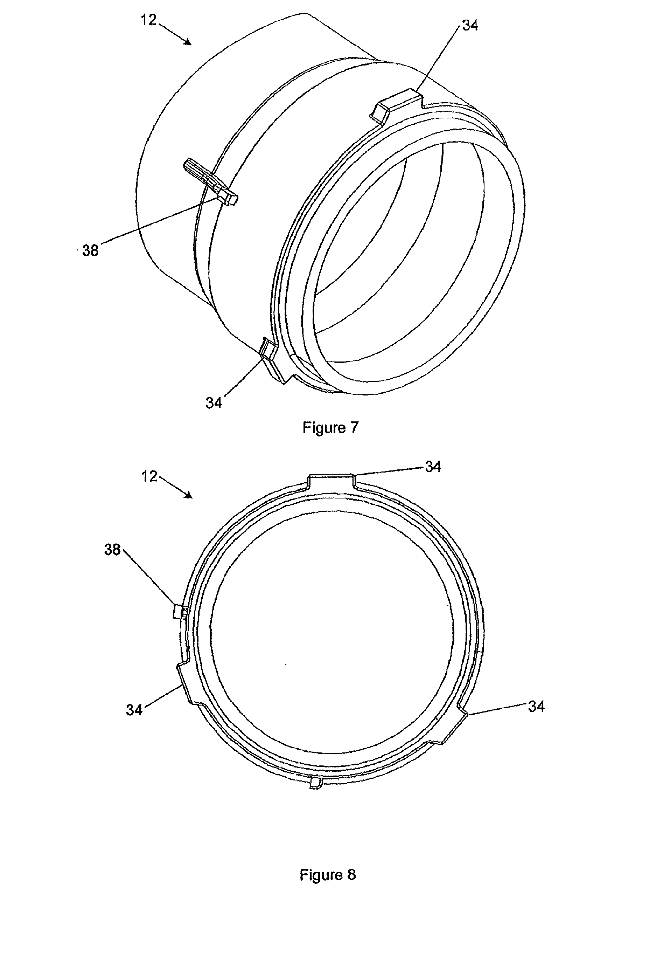

Figures 7 and 8 illustrate an end of first duct 12. The end of first duct 12 is formed with pins 34 disposed around its circumference. Pins 34 are configured to align with corresponding L-shaped slots 36 formed in the connector 10 to form a bayonet socket to allow the connector 10 to be easily fixed to the duct 12 and twist-locked. In the example shown, the pins are not evenly disposed around the duct 12. This creates a single orientation in which the connector 10 can be received by the duct 12 to prevent incorrect installation. In this regard, one of the pins and its corresponding slot has been rotated around the body 16 of the connector by five degrees.

Use of a bayonet socket allows the connector 10 to be positively connected to a duct as part of a sub-assembly process before the duct is fitted to a vehicle. This avoids costly joining operations, such as mechanical joining operations, welding, clamping or bonding, and does not require any special tooling, though provides a positive connection to allow the assembled duct and connector to be quickly and easily fitted to a vehicle on an assembly line.

Connection of the duct 12 and connector 10 is effected by axially introducing the connector over an end of the duct until the pins 34 can move no further in the slots 36. The connector 10 is then rotated so that the pins 34 move further along the slots 36. The duct 12 also includes a lug 38 which is configured to engage with a corresponding resilient tab 40 (Figures 5 and 6) to lock the duct 12 and the connector 10 together. The lug 38 and tab 40 are configured to be brought into engagement during rotation of the connector 10 and duct 12. Tab 40 can be lifted to disengage the lug 38 to release engagement.

The connector 10 is inserted over an end of the first duct 12 and rotated to lock the duct and the connector together prior to the first duct being fitted to the vehicle. The connected duct 12 and connector 10 are then fitted to the vehicle, and the second duct 14 may then be received by the connector 10 to complete the installation.

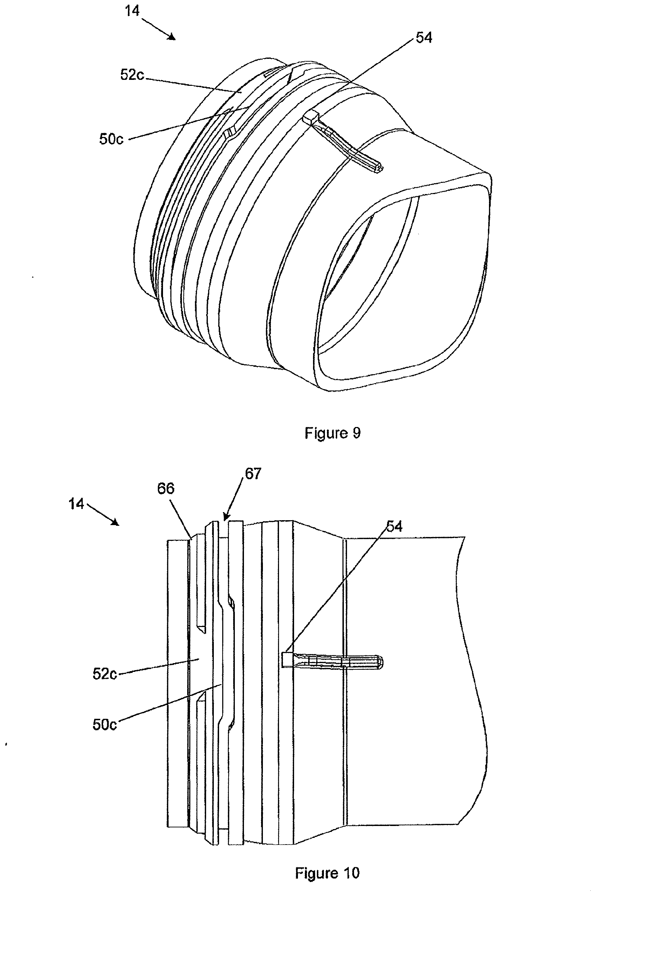

Figures 9, 10 and 11 illustrate an end of the second duct 14. The second duct 14 includes three lugs 50a, 50b, 50c disposed around an outer surface for engagement with engaging members 30a, 30b, 30c. The lugs 50a, 50b, 50c are formed by forming a continuous groove around the end of duct 14 in a region of increasing diameter.

During connection of the connector 10 to the second duct 14, the engaging members are forced radially outwards as they travel over ramps 52a, 52b, 52c formed on respective lugs 50a, 50b, 50c. As the engaging members pass over the ramps, the resilient nature of clip 18 urges them radially inwards to engage the lug and lock the connector 10 to the duct 14. A locating lug 54 may be provided to guide placement of the duct 14 to ensure correct orientation of the duct 14.

With reference to Figures 7 to 11, it can be seen that the features used for engagement between the ducts 12, 14 and the connector 10 have been formed in the external surface of the ducts 12, 14, thus avoiding costly post-moulding internal machining operations to provide suitable surfaces for engagement and sealing.

With reference to Figure 10, it can be seen that lug 50c, which corresponds to the central engaging member 30c, is axially offset from lugs 50a and 50b. This delays engagement of the central engaging member 30c with corresponding lug 50c until the lateral engaging members 30a, 30b have passed over their respective lugs and are in a longitudinal position to engage their respective lugs once the central engaging member 30c is engaged with lug 50c.

As described above, once the central engaging member 30c has moved radially inward and engaged its corresponding lug 50c, the lateral engaging members 30a, 30b are moved from a position where they interfere with the body 16 of the connector, and move radially inward under the resilient action of the clip 18, thus only allowing the lateral engaging members 30a, 30b to drop into position when they have passed over lugs 50a, 50b, thereby ensuring engagement of each engaging portion with each lug during connection.

In one example, the lugs are offset a predetermined distance so that once the central engaging member 30c is in a position for engagement, the lateral engaging members 30a, 30b have passed well over their respective lugs and can no longer engage a groove 67 formed behind the lugs. In this example, the connector 10 may be configured so as to be advanced along duct 14 until the central engaging member 30c has engaged lug 50c and then retracted slightly so that the lateral engaging members 30a, 30b can engage their respective lugs 50a, 50b. Alternatively, the connector can be configured so that once it has been received by the duct 14 and the lateral engaging members 30a, 30b have passed over their respective lugs, the central engaging member 30c can be further longitudinally advanced along the connector 10 by pushing it toward the duct 14 so that it engages its corresponding lug 50c, thus allowing the lateral engaging members 30a, 30b to drop into position and engage their corresponding lugs.

The shape of slot 22, as seen in Figure 3, allows axial movement between the engaging members to occur to accommodate the axially offset lugs on the duct. The delayed engagement of the central engaging member prevents engagement of only one or two lugs by the clip, thereby providing a positive locking action between the duct 14 and the connector 10.

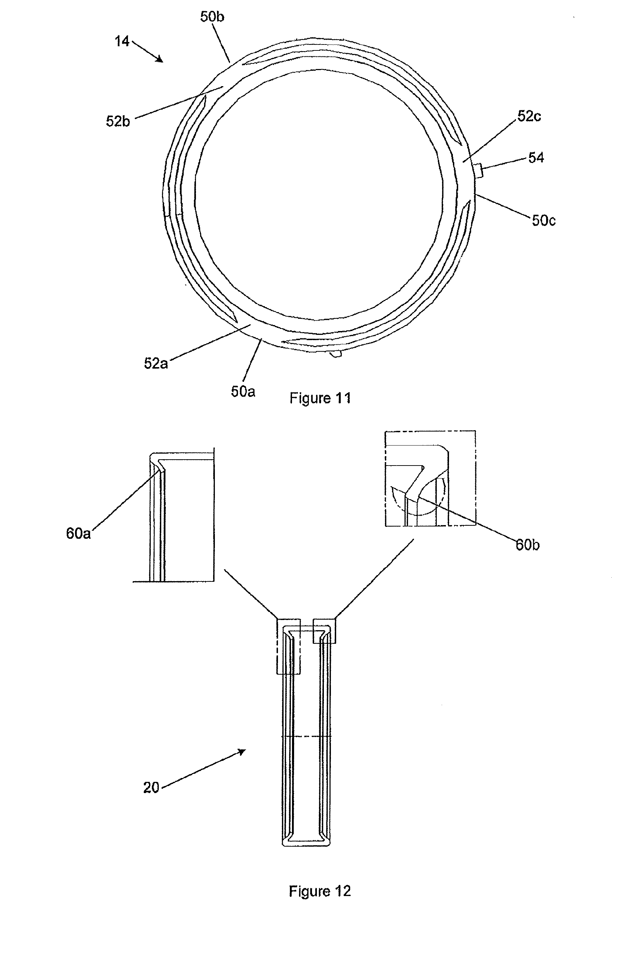

Figure 12 further illustrates the configuration of seal 20. Seal 20 has a pair of lips 60a, 60b in the form of inwardly turned flanges. As can be seen in Figure 2, the lips 60a, 60b engage an outer surface of the ducts 12, 14 so that the seal 20 acts upon the ducts to be joined and does not need to form a seal with the connector. Advantageously, a single seal can be used to seal both ducts without interaction with the connector. The configuration of the lips 60a, 60b provides that pressure from a fluid, such as air, flowing through the duct causes the lips 60a, 60b to be brought into tighter engagement with each of the ducts 12, 14 to increase the effectiveness of the seal as the fluid pressure increases. The configuration of the seal also provides that a single seal can seal both ducts 12, 14 and also provides that the seal does not need to support clamping loads and can thus be optimised for sealing. The seal 20 can be made from Nitrile for low temperature applications and Viton or SI (Q) for high temperature applications.

During assembly of the connector, the seal 20 is inserted into the connector 10 prior to connection of the connector 10 with either duct 12, 14. Insertion of the seal 20 involves pushing the seal 20 into the connector 10 until a first side of the seal 20 abuts shoulder 62 formed on an internal surface of the connector 10. Due to the improved sealing characteristics of the double lip arrangement of the seal 20, it can be made of a softer material, thereby making insertion of the seal 20 into the connector 10 easier than it may otherwise be if the seal 20 were made of a harder material. Connection of the connector 10 and the first duct 12 brings shoulder 64 into contact with a second side of the seal 20 to retain the seal 20 in position.

Second duct 14 may have an annular ramp 66 extending around its circumference so that the seal 20 moves up the ramp as the second duct 14 is introduced into the connector to increase the contact between the seal 20 and the duct 14.

The seal 20 shown in Figure 12 has been arranged for high pressure applications and would not be suitable in its present form for applications where a fluid is passing through the ducts under vacuum conditions. It is envisaged that the connector could be reconfigured so that the lips 60a, 60b are alternatively configured to provide a similar sealing action for vacuum applications.

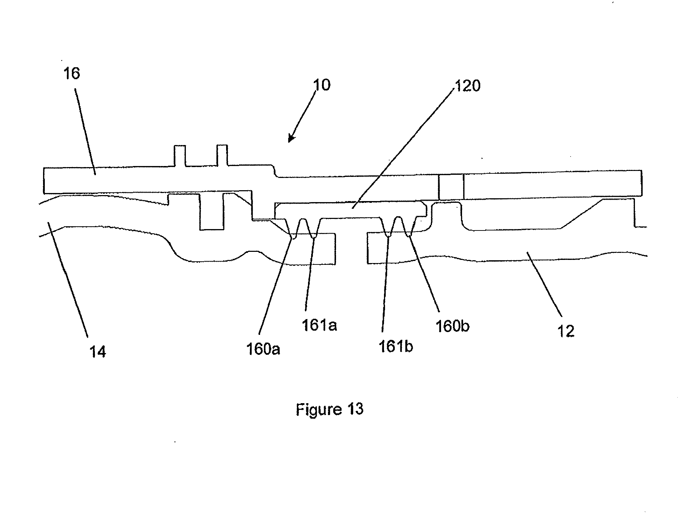

Figure 13 illustrates an example of a seal 120 suitable for vacuum applications. The seal 120 has a first rib 160 and a second rib 161 extending radially inwardly from each end of the seal 120 to engage an outer surface of ducts 12, 14. In the example shown, ribs 160, 161 extend through a surface of ducts 12, 14 to indicate an interference fit between the parts. In practice, each rib deforms slightly during assembly so that they are biased against the ducts to provide a positive seal.

In the example shown, the fluid flowing through ducts 12, 14 under vacuum conditions acts to draw air from around the connector and deform the ribs 160, 161. Providing first and second ribs reduces this action so that a positive seal can be provided between the first and second ducts 12, 14 within the connector 10.

The embodiments have been described by way of example only and modifications are possible within the scope of the invention disclosed. For example the connector 10 may be provided with a resilient clip on opposing ends of the connector. The connector 10 may also connect to a spigot formed on an intermediate mating part and not directly to either duct. The connector may be also configured for use with ducts through which either a fluid or a gas is flowing.

## Claims

1. A quick-connect connector for connecting ends of first and second ducts, the connector including a sleeve having opposite ends to be received over the ducts, wherein the sleeve has quick-connect couplings disposed at each to engage corresponding couplings on the duct ends.

2. A connector according to claim 1, wherein at least one of the quick-connect couplings has a resilient clip configured to engage corresponding lugs on the first duct end.

3. A connector according to claim 2, wherein both of the quick-connect couplings have resilient clips configured to engage corresponding lugs on the duct ends.

4. A connector according to claim 2, wherein a second quick-connect coupling forms part of a twist-lock bayonet coupling.

5. A connector according to any of claims 2 to 4, wherein the at least one resilient clip has a plurality of engaging portions configured to engage the lugs and the sleeve is configured to maintain alignment of the engaging portions as the connector is being received over an end of the duct and configured to allow at least one of the engaging portions to be further advanced along the sleeve after the connector has been received to engage a respective corresponding lug which has been axially offset along the duct.

6. A connector according to claim 5, wherein the connector is configured so that retraction of the connector causes any of the engaging portions which have not engaged corresponding lugs when the connector has been received to become engaged with those lugs.

7. A connector according to any of claims 5 to 6, wherein the at least one resilient clip is generally semi-circular and has two lateral duct engaging portions, each being disposed near an end of the clip.

8. A connector according to claim 7, wherein the lateral duct engaging portions are biased radially inward and configured so as to be disengaged from their corresponding lugs when the central engaging portion is disengaged from its corresponding lug.

9. A connector according to any of claims 2 to 8, wherein the at least one resilient clip extends around an external surface of the connector.

10. A connector according to any preceding claim, further including a seal disposed within the sleeve to engage an outer surface of each duct end to fluidly seal the connection.

11. A connector according to claim 10, wherein the seal has a pair of lips in the form of inwardly turned flanges, each lip configured to engage an end of the ducts so that pressure of a fluid flowing in the duct urges the lip against the ducts.

12. A connector according to claim 10, wherein the seal has a pair of inwardly projecting ribs adjacent each end of the connector.

13. A connector according to claim 4, wherein the bayonet coupling includes three slots, one of which is offset around the circumference of the connector so that the connector can only be connected to the first duct in a single orientation.

14. A system, including a connector according to any preceding claim and first and second ducts fixed thereto.

15. A duct system according to claim 14, wherein lugs are formed on the first duct to engage the first quick-connect coupling, the lugs being in the form of ramps extending radially outward, at least one of which is axially offset along the duct.
